# EUROPÄISCHE PATENTANMELDUNG

(11) **EP 1 518 597 A2**
(43) Veröffentlichungstag der Anmeldung: **30.03.2005**
(21) Anmeldenummer: 04021955.2
(22) Anmeldetag: 15.09.2004
(51) Int. Cl.: B01D 53/30

(54) **Modulares System für die Behandlung von Schadstoffe enthaltenden Prozessabgasen**

(30) Priorität: 26.09.2003 DE 10346284; 18.12.2003 DE 10360355
(71) Anmelder: DAS - Dünnschicht Anlagen Systeme GmbH, 01217 Dresden (DE)
(72) Erfinder: Reichardt, Horst, Dr., 01219 Dresden (DE); Frenzel, Andreas, Dr., 01219 Dresden (DE); Gehmlich, Konrad, 01662 Meissen (DE); Wilde, Michael, 01219 Dresden (DE); Merforth, Egbert, 01099 Dresden (DE)
(74) Vertreter: Pfenning, Meinig & Partner GbR

(57) **Zusammenfassung**

Die Erfindung betrifft ein modulares System für die Behandlung von Schadstoffe enthaltenden Prozessabgasen. Aufgabengemäß soll eine Möglichkeit von Nachbehandlung von solchen Prozessabgasen vorgeschlagen werden, die kostengünstig einen sicheren Betrieb ermöglicht. Dabei sollen eine ausreichende Redundanz sowie eine flexible Anpassung an steigende nachzubehandelnde Kapazitäten möglich sein. Das erfindungsgemäße modulare System ist dabei so ausgebildet, dass eine elektronische Steuerung für Brenner, die Zufuhr von Prozessabgasen, Waschflüssigkeit und/oder von Brenngas in Reaktionskammern vorhanden ist. Dabei bilden mindestens zwei Reaktionskammern Module, die mittels der elektronischen Steuerung für eine gleichzeitige oder alternierende Behandlung von Prozessabgasen unter Berücksichtigung detektierter Betriebszustände am System oder mindestens einem Modul gesteuert werden können.

## Beschreibung

Die Erfindung betrifft ein modulares System für die Behandlung von Schadstoffen enthaltenden Prozessabgase. Dabei kann eine Behandlung von Prozessabgasen, wie sie bei den verschiedensten Technologien für die Oberflächenmodifizierung im Vakuum anfallen, erfolgen.

Die bei solchen Prozessen anfallenden Abgase sind in der Regel häufig mit Stoffen belastet, die auch toxisch sein können und die insbesondere nicht ohne weiteres unbehandelt an die Umwelt abgegeben werden können.

Für die Nachbehandlung solcher Schadstoffe enthaltenden Prozessabgase ist es üblich Anlagen und Einrichtungen einzusetzen, mit denen die Schadstoffe aus den jeweiligen Prozessabgasen abgetrennt oder durch eine geeignete Behandlung in andere Stoffe umgewandelt werden, die die negativen Eigenschaften der Schadstoffe nicht mehr aufweisen bzw. auch solche Stoffe, die in anderweitiger Form einfacher entsorgt werden können.

Solche bekannten Einrichtungen sind beispielsweise Gaswäschen oder auch Anlagentechnik, bei der eine thermische Nachbehandlung zur Umwandlung der gefährlichen Stoffe führt. Es gibt aber auch Kombinationen dieser bezeichneten Anlagen.

Da die Anlagentechnik für solche Oberflächenmodifizierungsverfahren im Vakuum insbesondere aus ökonomischen Gründen kontinuierlich betrieben werden soll, muss eine solche kontinuierliche Möglichkeit zur Nachbehandlung solcher Prozessabgase ebenfalls gegeben sein.

Aus diesem Grunde ist es bisher erforderlich mindestens eine gesamte Anlage zusätzlich vorzuhalten, um die geforderte Redundanz zu gewährleisten. Eine solche Anlage entspricht in ihrer eigentlichen Ausführung zumindest der einen für die Aufrechterhaltung des normalen Betriebes ohnehin erforderlichen Anlage und ist auf die gleiche Kapazität ausgelegt. Sie weist dementsprechend sämtliche Komponenten, wie auch die unbedingt erforderliche Anlage auf. Dementsprechend sind auch die Kosten solcher Anlagen gleich.

Oft sind die Prozessanlagen zur Oberflächenmodifizierung komplex aus mehreren Komponenten aufgebaut, d.h. an eine zentrale Station zur Be- und Entladung der zu behandelnden Substrate sind mehrere gleichartige oder verschiedene Prozesskammern angeschlossen, deren Prozessabgase auch getrennt von Vakuumpumpen abgeführt werden.

Bei einer Erweiterung der Prozessanlage um eine Kammer bzw. einer Modifikation einer Kammer mit erhöhten Prozessabgasmengen ist der Betreiber gezwungen in eine oder mehrere solcher vollständigen herkömmlichen Abgasentsorgungsanlagen zu investieren.

Es ist daher Aufgabe der Erfindung eine Möglichkeit für eine Nachbehandlung von Schadstoff enthaltenden Prozessabgasen vorzuschlagen, kostengünstig, die die für einen sicheren Betrieb erforderliche Redundanz gewährleisten sowie ebenfalls in kostengünstiger Form eine flexible Anpassung an steigende nachzubehandelnde Kapazitäten erreichen kann.

Erfindungsgemäß wird diese Aufgabe mit einem modularen System für die Behandlung von Schadstoff enthaltenden Prozessabgasen, wie es mit dem Patentanspruch 1 definiert ist, gelöst. Vorteilhafte Ausgestaltungsformen und Weiterbildungen der Erfindung können mit den in den untergeordneten Ansprüchen bezeichneten Merkmalen erreicht werden.

Die erfindungsgemäßen modularen Systeme für die Behandlung von Schadstoffe enthaltenden Prozessabgasen bestehen aus mindestens zwei Reaktionskammern, die Module bilden, wobei neben den Reaktionskammern weitere Komponenten an den einzelnen Modulen vorhanden sein können.

Die Module können gemeinsam oder alternierend betrieben/gesteuert werden, wobei dies unter Berücksichtigung detektierter Betriebszustände am modularen System oder mindestens einem der Module eines Systems erfolgt.

Hierzu können für die Detektion von Betriebszuständen Sensoren vorhanden sein.

Geeignete Sensoren sind Temperatur-, Volumenstrom-Massestrom- und/oder Drucksensoren.

Solche Sensoren können in bzw. aber auch an einzelnen Modulen angeordnet sein, wobei die Auswahl des jeweiligen Anordnungsortes der Sensoren unter Berücksichtigung des jeweiligen physikalischen Messprinzips erfolgen kann.

So besteht beispielsweise die Möglichkeit, Temperatursensoren in aber auch außerhalb von Reaktionskammern für eine thermische Behandlung einzusetzen. Mit solchen Temperatursensoren dann beispielsweise mittels eines vorgegebenen Schwellwertes detektiert werden, ob beispielsweise Brenner an Reaktionskammern für eine thermische Behandlung von Prozessabgasen in Betrieb sind oder ein Defekt aufgetreten ist.

Eine solche Detektion kann aber auch mit geeigneten optischen Detektoren, die dann als Infrarot-Sensoren ausgebildet sind, von außen erfolgen.

Volumenstrom-, Massenstrom-, aber auch Druck-Sensoren können aber auch in Zuführungsleitungen für Prozessabgase, Brenngase und gegebenenfalls auch in Zufuhrleitungen für Waschflüssigkeit angeordnet sein.

Mit den Messsignalen von Sensoren kann über eine elektronische Steuerung Einfluss auf den Betrieb eines gesamten modularen Systems und auf die einzelnen Module eines solchen Systems genommen werden.

So können in analoger Form, wie dies bei den Temperatur-Sensoren bereits angesprochen worden ist, bei Über- oder auch Unterschreiten von vorgegebenen Schwellwerten von Messsignalen einzelner Sensoren, Steuersignale generiert werden, die beispielsweise ein Abschalten eines defekten Moduls und ein Umschalten auf ein anderes funktionsfähiges Modul des Systems auslösen.

In vorteilhafter Weise kann für eine relativ sichere Gewährleistung der von Betreibern Prozessabgase erzeugender Anlagen geforderter Redundanz gewährleistet werden, dass bei einem aus mindestens drei, bevorzugt aus vier Modulen gebildeten System ein Modul vorgehalten ist, auf das bei Ausfall mindestens eines der anderen Module umgeschaltet werden kann. In diesem Modul erfolgt dann in einer solchen Phase die Nachbehandlung der Prozessabgase bis das bis dahin abgeschaltete Modul wieder funktionsfähig ist.

Ein solches zusätzliches Modul kann aber auch in Zeiträumen, bei dem an einem oder weiteren Modulen eines Systems Reinigungs- und Wartungsarbeiten durchgeführt werden müssen, manuell zugeschaltet werden.

Mit so ausgebildeten modularen Systemen können bei reduzierten Kosten eine nahezu 100 %-ige Betriebssicherheit für die Nachbehandlung von Prozessabgasen erreicht werden.

Vorteilhaft ist es, ein solches die Redundanz sicherndes Modul mit erhöhter Kapazität für eine Behandlung von Prozessabgasen vorzusehen. So sollte ein solches Modul mindestens die 2-fache Kapazität für die Behandlung von Prozessabgasen aufweisen, als dies für die anderen Module eines Systems der Fall ist. Im Extremfall kann die Kapazität dieses einen Moduls sogar so groß sein, dass es der Kapazität aller anderen Module des Systems entspricht.

An einem erfindungsgemäßen modularen System kann vorteilhaft eine einzige elektronische Steuerung für die unterschiedlichen Komponenten des Systems vorhanden sein, die über Schnittstellen an der elektronischen Steuerung angeschlossen werden können.

Die einzelnen Module eines Systems können reine Gaswäschen, Reaktionskammern für die thermische Behandlung der Prozessabgase oder auch Kombinationen davon bzw. Bestandteil von Modulen sein.

So ist es üblich, dass bei einer thermischen Behandlung in Reaktionskammern auch eine Waschflüssigkeit eingeführt wird, um an der inneren Kammerwand Anhaftungen zu vermeiden und im Prozessabgas enthaltene oder auch bei der thermischen Behandlung gebildete Partikel abführen zu können.

Dementsprechend können an die angesprochene elektronische Steuerung die Zufuhr für Prozessabgase, eine Waschflüssigkeit und/oder ein Brenngas für Brenner angeschlossen sein. Über die elektronische Steuerung kann dann die Zufuhr dieser Medien gesteuert und gegebenenfalls auch geregelt werden.

Im einfachsten Fall werden die Zufuhrleitungen für die drei erwähnten Medien zu einem Modul lediglich geöffnet oder geschlossen.

Das erfindungsgemäße modulare System kann so ausgebildet sein, dass an Schnittstellen der einen einzigen elektronischen Steuerung mindestens ein zweites Modul angeschlossen werden kann, so dass mit der einen elektronischen Steuerung die beiden Module angesteuert werden können.

In diesem Fall ist dann die elektronische Steuerung unmittelbar an einem der beiden Module angeordnet und mit diesem verbunden, sie ist also integraler Bestandteil dieses einen Moduls und das zweite kann quasi lediglich beigestellt und an die elektronische Steuerung angeschlossen sein.

Es besteht aber auch die Möglichkeit die elektronische Steuerung separat von den einzelnen Modulen eines modularen Systems anzuordnen und diese an die Schnittstellen der elektronischen Steuerung entsprechend anzuschließen.

In bevorzugter Form sollten an eine elektronische Steuerung mindestens drei bzw. vier Module angeschlossen werden können.

In diesem Fall ist eine Reihenanordnung der Module günstig, wobei dann auch ein Modul Träger der elektronischen Steuerung sein kann.

Neben der einen als zentrale elektronische Steuerung für mehrere Module fungierenden elektronischen Steuerung können aber auch die Zuführungen für die bezeichneten Medien Prozessabgas, Waschflüssigkeit und/oder Brenngas und weitere Betriebsmedien, wie z.B. Druckluft, Stickstoff, Lauge u.a., in zentralisierter Form erfolgen.

So kann eine zentrale Zuführung für jeweils jedes einzelne der erwähnten Medien oder auch für alle bezeichneten Medien am erfindungsgemäßen modularen System vorhanden sein und diese zentrale Zuführung wiederum Verteilerfunktion für die jeweiligen Medien zu den jeweiligen Modulen übernehmen.

Solche zentralen Zuführungen können so ausgebildet sein, dass mindestens ein Zufluss für das jeweilige Medium in eine zentrale Zuführung mündet und an der zentralen Zuführung eine entsprechende Anzahl von Anschlüssen vorhanden ist, über die die Verbindung zwischen zentraler Zuführung und den einzelnen Modulen erfolgen kann.

Dabei sollten entsprechende Ventile in bzw. an der zentralen Zuführung, gegebenenfalls aber auch in Verbindungsleitungen zwischen der zentralen Zuführung und den einzelnen Modulen vorhanden sein, die zumindest mittels der elektronischen Steuerung geöffnet oder geschlossen werden können, so dass die jeweiligen Medien einem Modul, das zu diesem Zeitpunkt für eine Nachbehandlung von Prozessabgasen betrieben werden soll, zugeführt werden können.

Die erwähnten Anschlüsse können dann vorteilhaft an zentralen Zuführungen so positioniert werden, dass die jeweilige Anordnung von einzelnen Modulen berücksichtigt worden ist.

Die hierfür einsetzbaren Ventile sollten vorteilhaft steuer- und/oder regelbare Proportionalventile sein, mit denen auch die Möglichkeit der Beeinflussung der jeweiligen Volumen- bzw. Massenströme der den jeweiligen Modulen zuführbaren Medien erreichbar ist.

Für den Fall, dass eine Waschflüssigkeit in Module eingeführt werden soll, ist es bei einem erfindungsgemäßen modularen System ebenfalls vorteilhaft, diese an eine zentrale Aufbereitung für die Waschflüssigkeit anzuschließen. In einer solchen zentralen Aufbereitung können dann gegebenenfalls in der Waschflüssigkeit enthaltene Feststoffe separiert oder auch eine zusätzliche chemische Behandlung durchgeführt werden.

Die in der zentralen Aufbereitung aufbereitete Waschflüssigkeit kann dann wiederum rückgeführt werden, wobei dies bevorzugt an die bereits erläuterte zentrale Zuführung erfolgen sollte.

Die Betriebssicherheit der erfindungsgemäßen modularen Systeme kann vorzugsweise durch von einander getrennte Kreisläufe für Waschflüssigkeit einzelner Module erreicht werden. Es besteht aber auch die Möglichkeit, mehrere Module an einen gemeinsamen Kreislauf anzuschließen und mindestens ein Modul, das wiederum bevorzugt, das Modul für die Gewährleistung der Redundanz sein kann, an einen gesonderten Kreislauf anzuschließen.

Besteht keine zentrale Aufbereitung, ist es vorteilhaft den Medienverbrauch dadurch zu reduzieren, dass Waschflüssigkeit im System im Kreislauf geführt und aufbereitet wird.

Die elektronische Steuerung für ein erfindungsgemäßes modulares System und/oder auch eine zentrale Zuführung kann vorteilhaft unmittelbar oberhalb von den jeweiligen dem System zugeordneten Modulen angeordnet sein.

An einem erfindungsgemäßen modularen System können auch unterschiedlich ausgebildete Module angeordnet sein, mit denen jeweils eine unterschiedliche Nachbehandlung von Prozessabgasen durchgeführt werden kann.

In diesem Fall bietet es sich an, an einem modularen System jeweils Paare gleicher Module vorzusehen, um die gewünschte Redundanz zu gewährleisten. Selbstverständlich besteht aber auch die Möglichkeit mehrere erfindungsgemäße modulare Systeme einzusetzen.

Mit der erfindungsgemäßen Lösung können die im einleitenden Teil der Beschreibung erwähnten Nachteile vollständig und in einfacher Form beseitigt werden.

## Patentansprüche

1. Modulares System für die Behandlung von Schadstoffe enthaltenden Prozessabgasen mit einer elektronischen Steuerung für Brenner, die Zufuhr von Prozessabgasen, Waschflüssigkeit und/oder von Brenngas in Reaktionskammern,
**dadurch gekennzeichnet, dass** mindestens zwei Reaktionskammern Module bilden, die mittels elektronischer Steuerung für eine gleichzeitige oder alternierende Behandlung von Prozeßabgasen unter Berücksichtigung detektierter Betriebszustände am System oder mindestens einem Modul gesteuert sind.

2. System nach Anspruch 1, **dadurch gekennzeichnet, dass** am System und/oder den Modulen für die Detektion von Betriebszuständen Sensoren vorhanden sind.

3. System nach Anspruch 1 oder 2, **dadurch gekennzeichnet, dass** die Sensoren Temperatur-, Volumenstrom-, Massenstrom- und/oder Druck-Sensoren sind.

4. System nach einem der vorhergehenden Ansprüche, **dadurch gekennzeichnet, dass** bei einem aus mindestens drei Modulen gebildeten System, ein Modul bei Ausfall mindestens eines der anderen Module, durch Umschaltung die Redundanz des Systems gewährleistet.

5. System nach einem der vorhergehenden Ansprüche, **dadurch gekennzeichnet, dass** alle Module eines Systems identisch ausgebildet sind.

6. System nach einem der vorhergehenden Ansprüche, **dadurch gekennzeichnet, dass** voneinander verschiedene Module vorhanden sind.

7. System nach einem der vorhergehenden Ansprüche, **dadurch gekennzeichnet, dass** ein Modul eines Systems eine mindestens zweifache Kapazität für die Behandlung von Prozessabgasen aufweist, als die anderen Module des Systems.

8. System nach einem der vorhergehenden Ansprüche, **dadurch gekennzeichnet, dass** an der einen elektronischen Steuerung mindestens Schnittstellen für die Ansteuerung von mindestens zwei separaten Modulen vorhanden sind, wobei mindestens ein Modul an Schnittstellen anschließbar ist.

9. System nach einem der vorhergehenden Ansprüche, **dadurch gekennzeichnet, dass** die elektronische Steuerung unmittelbar an einem Modul angeordnet und mit diesem verbunden ist.

10. System nach einem der vorhergehenden Ansprüche, **dadurch gekennzeichnet, dass** an eine elektronische Steuerung mindestens drei Module anschließbar sind.

11. System nach einem der vorhergehenden Ansprüche, **dadurch gekennzeichnet, dass** die Module in einer Reihe nebeneinander angeordnet sind.

12. System nach einem der vorhergehenden Ansprüche, **dadurch gekennzeichnet, dass** eine zentrale Zuführung für Prozessabgas, Waschflüssigkeit und/oder Brenngas mit mindestens zwei Anschlüssen für Module vorhanden ist und Ventile zum Öffnen und Schließen der Anschlüsse an der elektronischen Steuerung angeschlossen sind.

13. System nach einem der vorhergehenden Ansprüche, **dadurch gekennzeichnet, dass** die Anschlüsse unter Berücksichtigung der Anordnung von Modulen angeordnet sind.

14. System nach einem der vorhergehenden Ansprüche, **dadurch gekennzeichnet, dass** die Ventile steuer- und/oder regelbare Proportionalventile sind.

15. System nach einem der vorhergehenden Ansprüche, **dadurch gekennzeichnet, dass** eine zentrale Aufbereitung für Waschflüssigkeit vorhanden ist, an die die Module anschließbar sind.

16. System nach einem der vorhergehenden Ansprüche, **dadurch gekennzeichnet, dass** wieder aufbereitete Waschflüssigkeit zu Modulen rückführbar ist.

17. System nach einem der vorhergehenden Ansprüche, **dadurch gekennzeichnet, dass** ein Rückführsystem für aufbereitete Waschflüssigkeit an eine zentrale Zuführung für Waschflüssigkeit angeschlossen ist.

18. System nach einem der vorhergehenden Ansprüche, **dadurch gekennzeichnet, dass** Waschflüssigkeit im System im Kreislauf über eine Waschflüssigkeitsaufbereitung geführt ist.

19. System nach Anspruch 18, **dadurch gekennzeichnet, dass** Waschflüssigkeit in einzelnen Modulen separat im Kreislauf geführt ist.

20. System nach einem der vorhergehenden Ansprüche, **dadurch gekennzeichnet, dass** Sensoren an Schnittstellen der elektronischen Steuerung anschließbar sind.

21. System nach einem der vorhergehenden Ansprüche, **dadurch gekennzeichnet, dass** die elektronische Steuerung und/oder zentrale Zuführung oberhalb von Modulen angeordnet ist/sind.

22. System nach einem der vorhergehenden Ansprüche, **dadurch gekennzeichnet, dass** Reaktionskammern zur thermischen Behandlung von Prozessabgasen vorhanden sind.
